# EUROPÄISCHE PATENTSCHRIFT

(11) **EP 0 964 283 B1**
(45) Veröffentlichungstag und Bekanntmachung des Hinweises auf die Patenterteilung: **09.04.2003**
(21) Anmeldenummer: 99111266.5
(22) Anmeldetag: 10.06.1999
(51) Int. Cl.: G02B 23/06, G02B 17/06

(54) **Kompakter Multi-Schiefspiegler**
Multiple tilted mirror compact telescope (Schiefspiegler)
Téléscope compacte comportant plusieurs miroirs inclinés (Schiefspiegler)

(30) Priorität: 11.06.1998 DE 19825942; 08.06.1999 DE 19925931
(43) Veröffentlichungstag der Anmeldung: 15.12.1999
(73) Patentinhaber: Wolter, Heino, Dr., 06108 Halle (DE)
(72) Erfinder: Wolter, Heino, Dr., 06108 Halle (DE)
(74) Vertreter: Voigt, Wolf-Rüdiger

(56) Entgegenhaltungen:
- DE-A- 4 314 499
- DE-A- 19 649 841
- US-A- 4 804 258
- US-A- 5 142 417

## Beschreibung

Die Erfindung bezieht sich auf eine optische Einrichtung, bestehend aus 3 Reflexionsspiegeln, die dem Typ der Schiefspiegler-Teleskope zugeordnet werden kann. Diese Geräte dienen dazu, astronomische und terrestrische Beobachtungen durchführen zu können. Die verwendete Optik kommt ohne Zwischenbild aus und bedient sich rotationssymmetrischer, meistens sphärischer Spiegel. Die Spiegelscheitel befinden sich dabei in einer gemeinsamen Ebene und die Spiegelnormalen sind gegen die optische Achse geneigt.

Die einfachste Form eines Schiefspieglers mit konkavem 1. Spiegel und konvexem 2. Spiegel ist von A. Kutter (Der Schiefspiegler, Verlag F. Weichert, 1953) angegeben worden. Durch Verkippung des 1. Spiegels entstehen axiale Bildfehler, hauptsächlich Koma und Astigmatismus, die sich durch geeignete Neigung, Abstände und Krümmungsradien der beiden Spiegel teilweise kompensieren lassen. Der verbleibende Bildfehler ist bei Öffnungen bis etwa 125 mm und einem typischen Öffnungsverhältnis von F/20 kleiner als die entsprechende Beugungsscheibe. Für größere Schiefspiegler wird eine Korrekturlinse im Strahlengang (katadioptischer Schiefspiegler nach A. Kutter, s. Telescope Optics, H. Rutten, M. van Venrooij, Verlag Willmann-Bell, 1988, S. 113) oder ein zusätzlicher konkaver Spiegel verwendet. Letzteres System, auch Tri-Schiefspiegler genannt, wurde von R. A. Buchroeder (Design Examples of TCT's s. OSC Technical Report # 68 'University of Arizona, Mai 1971, S. 19) und A. Kutter (Sky and Telescope 1975,I, S.46) entwickelt. Eine bessere Korrektur der Bildfehler bei größeren Öffnungen wurde von M Brunn, gemäß DE-PS 394 32 58 geboten, wobei 4 Reflexionen unter Verwendung eines konkaven 3. Spiegels und eines nachfolgenden Planspiegels durchgeführt werden. Nachteilig wirken sich jedoch die große Baulänge und der hohe Fertigungs- und Justieraufwand aus.
Eine weitere Lösung ist aus der Literatur von A. S. Leonhard bekannt. Er entwickelte ebenfalls eine 3-Spiegelvariante eines Schiefspieglers, den man auch als Solano-Reflektor bezeichnet (veröffentlicht in Advanced Telescope Making Technics, A. Mackintosh (E.D.), Verlag Willmann-Bell, 1986, Optics, Vol. 1, S. 231). Dieses System verwendet 2 konkave und einen konvexen Spiegel. Unterschiedliche Neigungen des konvexen Spiegels in Kombinartion mit einem zusätzlichen Planspiegel ermöglichen verschiedene Einblickrichtungen. Es können Paare von konvexen und konkaven sphärischen Spiegeln mit betragsmäßig gleichen Krümmungsradien verwendet werden, um den Aufwand zu reduzieren. Der konkave 1. Spiegel benötigt jedoch eine hyperbolische Ausbildung und es lassen sich nur Öffnungsverhältnisse kleiner als F/15 realisieren.
Eine kompaktere Bauweise schlägt E. Herrig lt. DE 196 49 841 A1 vor. Hier sind geringfügig geneigte Spiegel angeordnet, sodaß es zu zweimaliger Reflexion am 1. oder 2. Spiegel (oder an beiden) kommt. Es werden ein konvexer 1. Spiegel und ein konkaver 2. Spiegel und in einigen Varianten noch ein 3. Spiegel verwendet, um insgesamt 4 Reflexionen und eine abschattungsfreie Abbildung zu ermöglichen. Auch hier ist die Größe, insbesondere des konvexen Spiegels von Nachteil, da dieser bis zu 50 % größer als die Eintrittsöffnung dimensioniert ist.
Der Erfindung liegt mithin die Aufgabe zugrunde, die bekannten Nachteile der beschriebenen Art auf ein ökonomisch und fertigungstechnisch günstigeres Maß zu reduzieren und ein kompaktes, abschattungsfreies Spiegelsystem zu entwickeln, das mit wenigen in der Regel sphärischen Spiegeln auskommt und auch bei großen Öffnungen noch eine beugungsbegrenzte Abbildungsqualität liefert.

Erfindungsgemäß wird die Aufgabe dadurch gelöst, daß mit einer Spiegelkombination gearbeitet wird, die zahlreiche Freiheitsgrade hinsichtlich Geometrie, Größe der Eintrittsöffnung und Lichtstärke besitzt sowie zudem unterschiedliche Positionen der Fokussierung ermöglicht. Die zur Verfügung stehenden Parameter verbessern die Abbildungsqualität auch unter der Voraussetzung, daß Spiegel mit betragsmäßig gleichen Krümmungsradien verwendet werden. Diese Gestaltungsfreiheit hat den besonderen Vorteil, die Fertigungstoleranzen der Spiegel einerseits ökonomisch günstig zu beeinflussen und andererseits bei Abweichungen der gefertigten Spiegelradien mittels Nachoptimierung der Geometrie stets ein Instrument hoher Abbildungsqualität bereitzustellen.

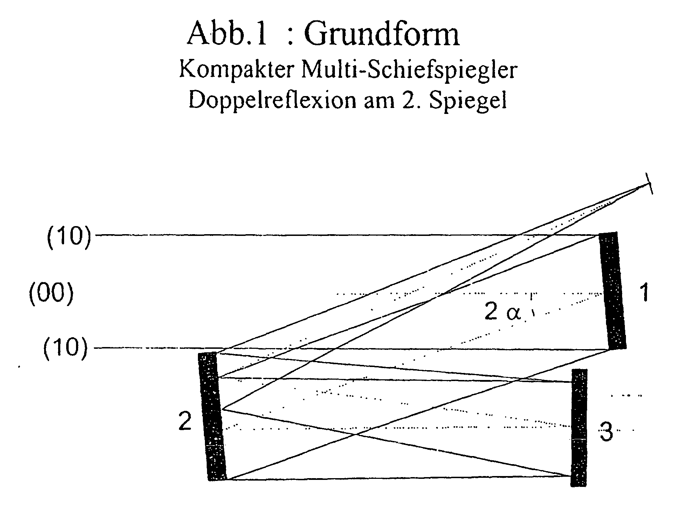

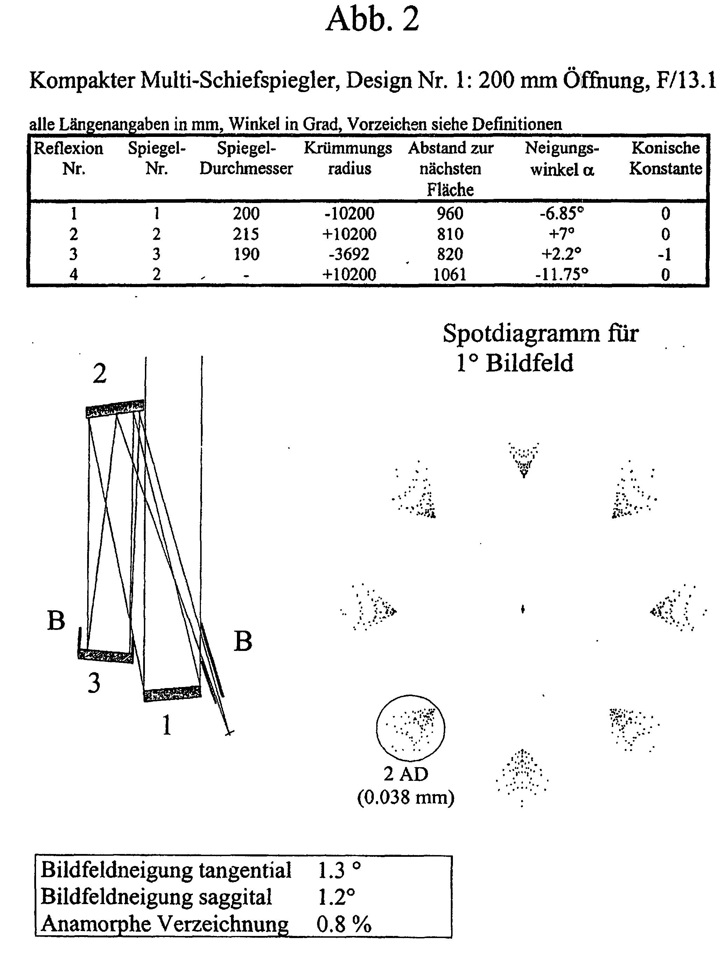

In der Abbildung 1 ist die zweckmäßige Grundform der Realisierung der Erfindung als Ausführungsbeispiel dargestellt, aus der sich weitere Varianten in den Abbildungen 2 bis 6 ableiten.
Sie sollen nachfolgend erläutert werden.
Die Darstellung in Abb. 1 zeigt die Grundform des kompakten Multi-Schiefspieglers. Zunächst fällt ein paralleles Lichtbündel (10) mit dem Hauptstrahl (00) auf einen konkaven Spiegel 1. Dieser ist so gegen die Einfallsrichtung geneigt, daß sich der Spiegel 2 außerhalb des einfallenden parallelen Lichtbündels (10) befindet und deshalb nicht beeinflußt wird. Für weitere Reflexionen ergeben sich je nach Neigungswinkel des Spiegels 2 verschiedene technische Ausführungsformen. Eine zweimalige Reflexion wird dabei am Spiegel 2 realisiert. Mit einem Spiegel 3 ergeben sich dann 4 Reflexionen. Die Nutzung der vorhandenen Freiheitsgrade bietet ausreichende Möglichkeiten der Bildfehlerkorrektur. In der v. g. Abb. wird die zweimalige Reflexion am Spiegel 2 vorgenommen, welcher eine konvexe Reflexionsfläche besitzt und betragsmäßig etwa den gleichen Drehwinkel wie der Spiegel 1 aufweist und gegen die optische Achse geneigt ist. Letztere wird durch den Hauptstrahl (00) des parallelen Lichtbündels (10) gebildet und verbindet die Scheitelpunkte der Spiegelreflexionsflächen miteinander. Die Spiegelneigungen α erfolgen um diese Scheitelpunkte und werden zwischen der Scheitelnormalen und der optischen Achse gemessen. Die Strahlablenkung ergibt sich damit zu 2 α. Die Neigungen werden in der gemeinsamen Ebene aller Spiegelscheitel und des Fokus ausgeführt. Nach der Reflexion am Spiegel 2 gelangt das Lichtbündel zum Spiegel 3, der sich vorzugsweise in der Nähe des Spiegels 1 befindet. Die Neigung des Spiegels 3 ist in diesem Fall nur gering und damit fällt das Lichtbündel auf einen dezentralen Flächenbereich des Spiegels 2 zurück. Die Reflexionsbedingung sieht anschließend eine Ablenkung des Lichtbündels in einen von Lichtstrahlen unberührten Raum vor, der auf der anderen Seite des parallelen Lichtbündels (10) liegt. Dieses konvergente Lichtbündel wird am Spiegel 1 vorbeigeführt und gelangt in dessen Nähe zum Fokus. Die Konstruktion erlaubt einen abschattungsfreien Strahlengang und eine Einblickrichtung, die nahezu einem Refraktor entspricht. Die Bildfehlerkorrektur gelingt bei dieser Kombination mit dem konkaven, parabolischen Spiegel 3. Weitere Ausgestaltungen der Grundform in Abb. 1 werden in den Abbildungen 2 bis 6 dargestellt.

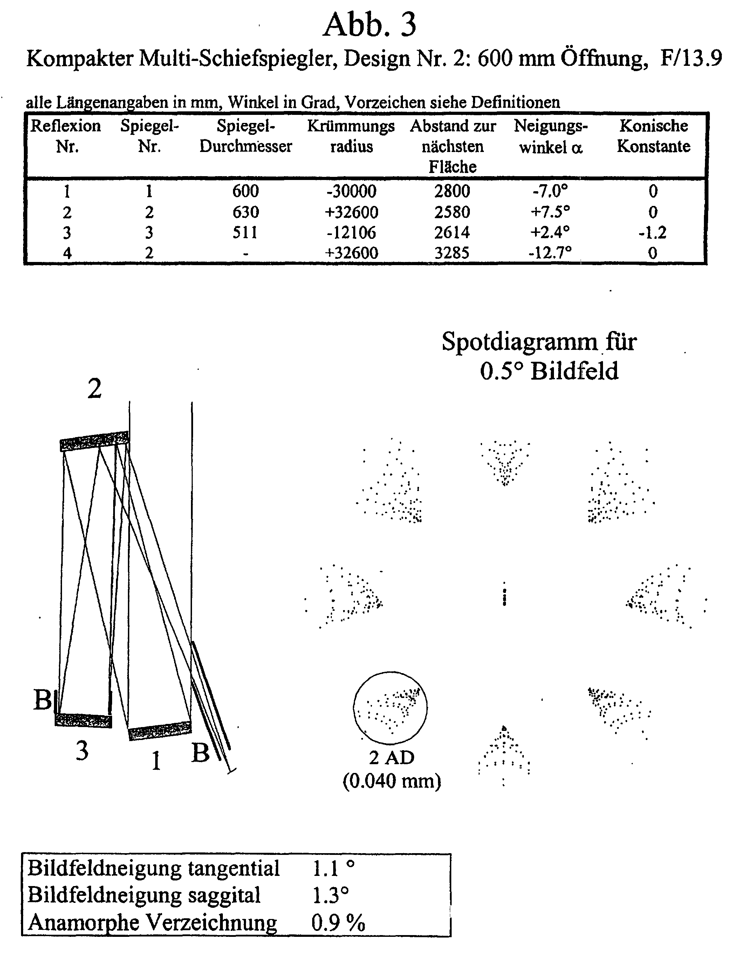

In Abb.2 wird eine Variante der Grundform nach Abb. 1 dargestellt, wobei der kompakte Multi-Schiefspiegler eine Öffnung von 200 mm besitzt und einen sphärischen, konkaven Spiegel 1 und einen sphärischen, konvexen Spiegel 2 aufweist. Der Spiegel 2 ist dabei so geneigt, daß das Lichtbündel auf den Spiegel 3 gelenkt wird, der sich in der Nähe des Spiegels 1 befindet. Der Spiegel 3 hat dabei eine konkave, parabolische Reflexionsfläche, wodurch eine Korrektur der sphärischen Abberation erreicht wird. Die Spiegel 2 und 3 befinden sich bzgl. des Objektlichts auf der gleichen Seite. Der Spiegel 3 besitzt nur eine geringe Neigung bzgl. der optischen Achse und reflektiert das Lichtbündel zurück auf einen dezentralen Bereich des Spiegels 2. Von dort gelangt es seitlich am 1. Spiegel vorbei zum Fokus. Es können Blenden B vor dem Fokus zur Beschränkung von Streulicht vorgesehen werden. Die eingesetzten Spiegel können neben der vorgeschlagenen sphärischen Reflexionsfläche, beispielsweise auch elliptische oder hyperbolische Reflexionsflächen besitzen. Aufgrund der zweimaligen Reflexion am Spiegel 2 besitzt dieser einen um 7 % größeren Durchmesser als der Spiegel 1. Die Krümmungsradien der Spiegel 1 und 2 sind hier betragsmäßig gleich. Das zugehörige Spotdiagramm ist für ein Bildfeld von 1° berechnet und zeigt eine beugungsbegrenzte Abbildungsqualität.
Das Ausführungsbeispiel in Abb.3 variiert ebenfalls die Grundform nach Abb. 1 und bedient sich verschiedener Krümmungsradien der Spiegel 1 und 2. Die Einrichtung besitzt bei einer Öffnung von 600 mm und einem-Bildfeld von 0,5° noch eine hohe Abbildungsqualität gemäß dem beigefügten Spotdiagramm. Damit ergibt diese Realisierung besonders leistungsfähige Instrumente, die insbesondere für Forschungszwecke geeignet sind. Die Neigung des Bildfeldes ist mit 1,3° als gering anzusehen. Instrumente dieser Ausführung können eine kreisförmige Eintrittsöffnung von der Größe des Hauptspiegels besitzen, die sich oberhalb des Spiegels 2 befinden sollte. Ringförmige Blenden B und der Spiegel 3, analog wie Abb.2 sowie in der Nähe des Fokus vermindern Streulichteinflüsse.

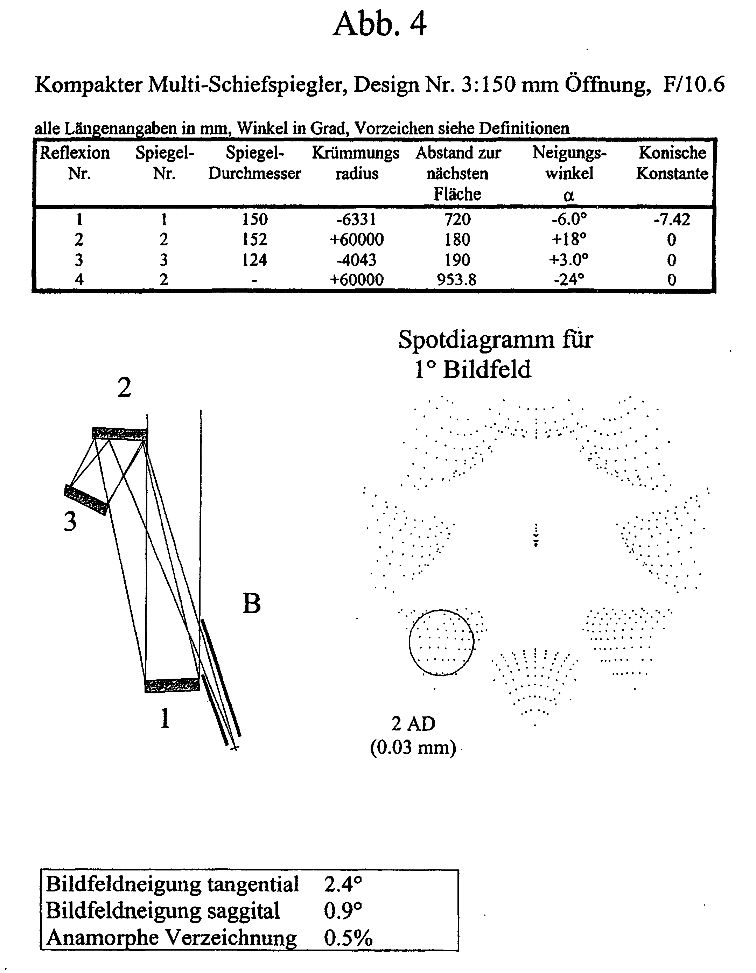

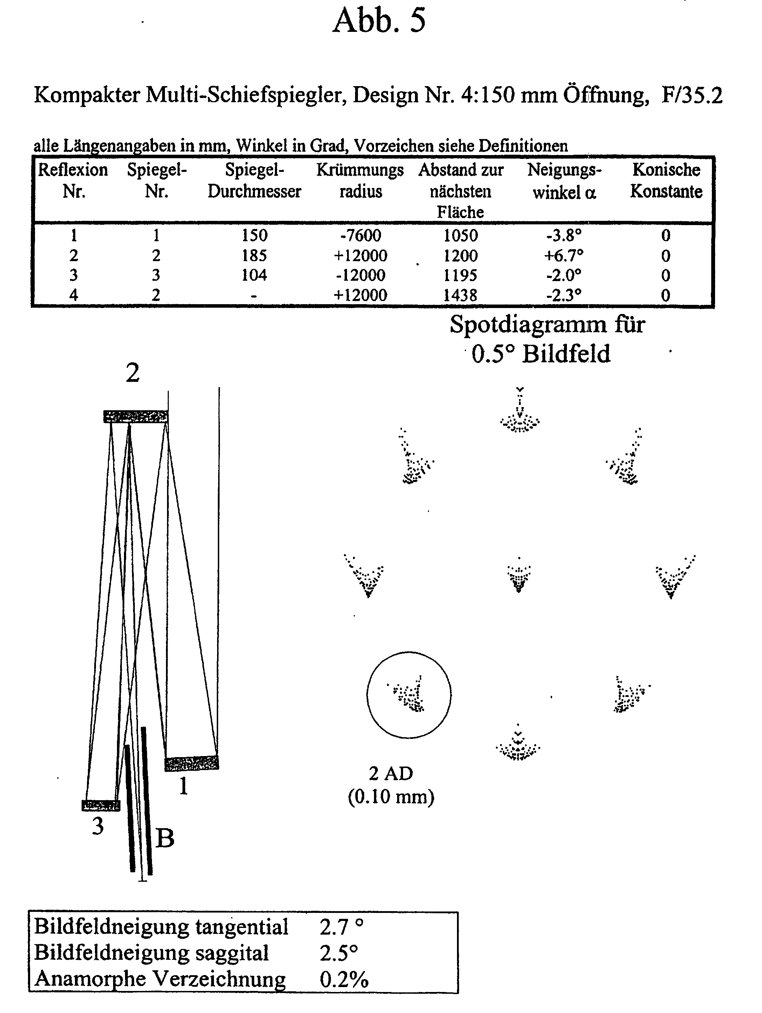

Die Abb. 4 zeigt eine weitere Variante nach der Grundform der Abb. 1, wobei der Abstand zwischen den Spiegeln 2 und 3 verkürzt ist. Die Korrektur der Bildfehler erfordert hier einen hyperbolischen Spiegel 1 und einen sphärischen, konvexen Spiegel 2 mit großem Krümmungsradius. Die Ausführung in Abb.5 geht auch auf die Grundform der Abb. 1 zurück. Dabei erfolgt die Neigung des Spiegels 3 in umgekehrtem Drehsinn. Nach zweimaliger Reflexion am Spiegel 2 wird das Lichtbündel zwischen den Spiegeln 1 und 3 hindurch zum Fokus geführt. Diese Kombination erlaubt die Konzipierung von kompakten und besonders langbrennweitigen Instrumenten. Alle Spiegel besitzen sphärische Reflexionsflächen.

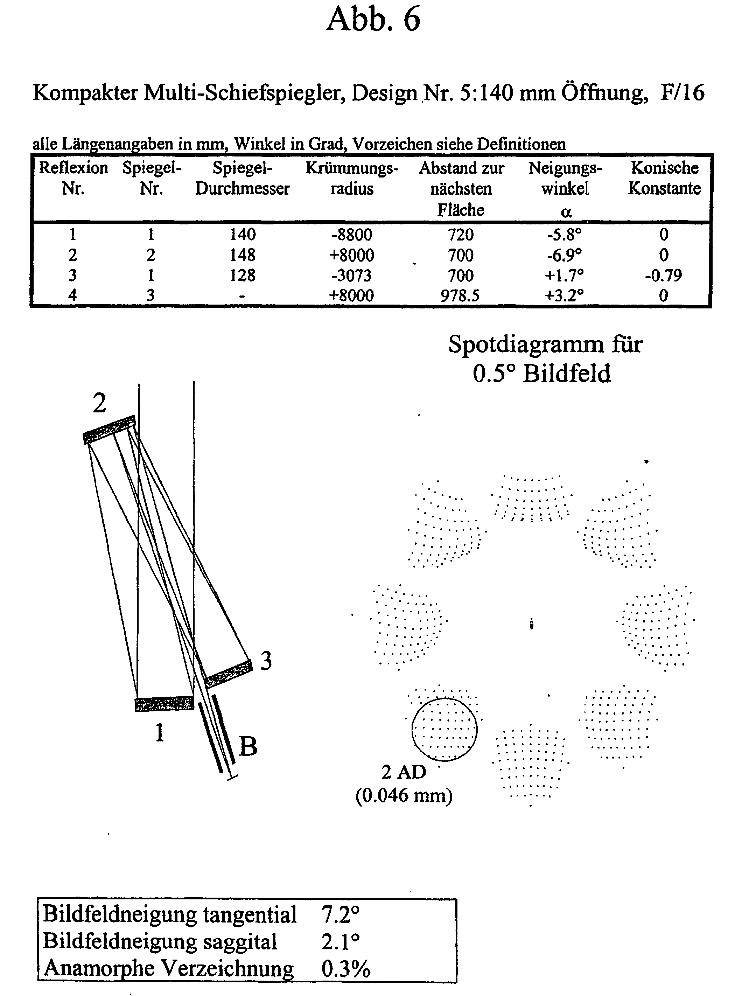

Eine weitere Ausführung in Anlehnung an die Grundform der Abb. 1 bietet die Abb. 6 an. Im Gegensatz zu den Beispielen der Abb.2 bis 5 erfolgt hier die Neigung des Spiegels 2 in umgekehrtem Drehsinn. Damit befinden sich der Spiegel 2 und der Spiegel 3 auf gegenüberliegenden Seiten hinsichtlich des Objektlichtes. Das Licht wird zwischen dem Spiegel 1 und Spiegel 3 zum Fokus geführt. Die Spiegel 1 und 2 sind hier sphärisch und der Spiegel 3 elliptisch ausgebildet.

Zusammenfassend lassen sich die besonderen Vorteile des kompakten Multi-Schiefspieglers wie folgt beschreiben:
- Mit einfachen, sphärischen und parabolischen Reflexionsflächen lassen sich freie Öffnungen von mehr als 600 mm Durchmesser realisieren. Die Bildfeldneigung bleibt dabei gering.
- Vielfach können Paare konvexer und konkaver Spiegel mit betragsmäßig gleichen Krümmungsradien verwendet werden.
- Kompakte Bauweise.
- Herstellung von relativ lichtstarken Instrumenten (bis F/9).

### Ergänzend sollen folgende Anmerkungen vorgenommen werden:

Die in den Tabellen angegebene Reflexions-Nr. zählt die Abfolge der Reflexionen, während die Spiegel-Nr. aussagt, an welchem Spiegel die Reflexion stattfindet. Die Spiegel sind in den Abbildungen mit der Spiegel-Nr. versehen. Bei den angegebenen Spiegeldurchmessern ist die größere Reflexionsfläche bei Rückreflexion und aufgrund des geforderten Bildfeldes berücksichtigt. Der in den Datentabellen angegebene Abstand wird entlang der optischen Achse zwischen den Scheiteln der jeweiligen Reflexionsflächen gemessen. Der Abstand ist immer von der aktuellen Reflexionsfläche bis zur nächsten angegeben. Eine Ausnahme ist der Abstand nach der 4. Reflexion, der die Distanz von der 4. Reflexionsfläche bis zum Fokus angibt. Krümmungsradien konkaver Flächen werden mit negativem Vorzeichen versehen, Radien konvexer Flächen mit positivem. Nach links drehende Spiegelneigungen werden negativ, rechts drehende positiv gezählt. Die konische Konstante c definiert die rotationssymmetrische Reflexionsfläche des Spiegels. Es gilt der Zusammenhang: c = - (Exzentrizität )². Die dargestellten Spotdiagramme beschreiben die Abbildung eines Bündels von Parallelstrahlen in der Fokalebene für achsennahe Strahlen ( zentraler Spot) und für 8 außeraxiale Parallelstrahlenbündel aus unterschiedlichen Richtungen, die eine Winkeldivergenz von 0,5 x Bildfeld von der optischen Achse aufweisen. Die meridionale Richtung entspricht einer waagerechten Linie durch den Zentralspot, die saggitale und tangentiale einer Senkrechten. Die zweifache Beugungsscheibe ( 2 AD) ist in allen Spotdiagrammen einmal durch einen maßstäblichen Kreis gekennzeichnet. Deren Durchmesser in mm ist zusätzlich angegeben. Die Abbildungsebene des Spotdiagrammes ist entsprechend der mittleren Bildfeldneigung geneigt.

## Patentansprüche

1. Kompakter Multi-Schiefspiegler mit
* in einer gemeinsamen Ebene angeordneten, zueinander geneigten ersten, zweiten und dritten Spiegeln (1), (2), (3);
* wobei der erste Spiegel (1) dem einfallenden Lichtbündel zugewandt ist und der zweite und dritte Spiegel (2), (3) außerhalb des Lichtbündels derart angeordnet sind, daß das einfallende Lichtbündel vom ersten Spiegel (1) auf den zweiten Spiegel (2), auf den dritten Spiegel (3) und zurück auf den zweiten Spiegel (2) reflektiert wird, sodaß durch Doppelnutzung des zweiten Spiegels (2) die Eigenschaften eines 4-Spiegel-Teleskops mit gefaltetem Strahlenverlauf erzielt werden und nach der vierten Reflexion ein reelles Bild des Betrachtungsgegenstandes erzeugt wird:
* wobei der erste Spiegel (1) eine konkave Reflexionsfläche aufweist;
* wobei der zweite Spiegel (2) eine konvexe Reflexionsfläche aufweist;
* wobei der dritte Spiegel (3) eine konkave Reflexionsfläche aufweist.

2. Kompakter Multi-Schiefspiegler nach Anspruch 1, **dadurch gekennzeichnet, daß** eine Minimierung der Abbildungsfehler durch geeignete Wahl der Brennweiten, Spiegelabstände, Neigungswinkel sowie bei Bedarf eine geeignete rotationssymmetrische Deformation der Reflexionsflächen vorgesehen wird.

## Claims

1. Compact Multi-Schiefspiegler with
* primary, secondary, and third mirror (1) (2) (3), all of them located in the same plane and tilted towards each other;
* where the primary mirror (1) faces the incoming light bundle, with the secondary and third mirror (2) (3) being located outside the light bundle in such a way that the incoming light bundle is reflected from the primary mirror (1) to the secondary mirror (2), then to the third mirror (3), and back to the secondary mirror (2) so that the secondary mirror (2) is used twice and in this way achieves the same properties as in a 4-mirror telescope with folded optical path, and after the fourth reflection produces a real image of the object of observation, with
* the primary mirror (1) having a concave reflecting surface; and
* the secondary mirror (2) having a convex reflecting surface; and
* the third mirror (3) having a concave reflecting surface.

2. Compact Multi-Schiefspiegler according to claim 1 **characterized in that** image errors are minimized by selecting appropriate focal lengths, mirror distances, tilting angles, and in case of need the reflecting surfaces can receive a rotationally symmetrical deformation.

## Revendications

1. Miroir compact multi-Schiefspiegler avec
* disposés dans un plan commun les premier, deuxième et troisième miroirs (1), (2), (3) inclinés l'un par rapport à l'autre;
* le premier miroir (1) étant orienté vers le faisceau incident et le deuxième et troisième miroir (2), (3) étant disposés hors du faisceau lumineux de telle manière que le faisceau de lumière incident soit réfléchi du premier miroir (1) sur le deuxième miroir (2), sur le troisième miroir (3) et en retour sur le deuxième miroir (2), si bien que par la double utilisation du deuxième miroir (2) on réalise les propriétés d'un télescope à 4 miroirs avec cours plié du rayon et l'on produit après la quatrième réflexion une image réelle de l'objet observé :
* le premier miroir (1) présentant une surface de réflexion concave ;
* le deuxième miroir (2) présentant une surface de réflexion convexe;
* le troisième miroir (3) présentant une sur face de réflexion concave.

2. Miroir compact multi-Schiefspiegler selon la revendication 1, **caractérisé par le fait qu'**une minimalisation des erreurs de représentation est prévue par le choix adéquat des distances focales, des distances de miroirs, des angles d'inclinaison et en cas de besoin par une déformation symétrique de rotation adéquate des surfaces de réflexion.
